# EUROPEAN PATENT SPECIFICATION

(11) **EP 4 024 168 B1**
(45) Date of publication and mention of the grant of the patent: **27.08.2025**
(21) Application number: 20866625.5
(22) Date of filing: 08.09.2020
(51) Int. Cl.: G06F 3/0484, G06F 3/04883, G06F 1/16, H04M 1/72454, G06F 3/04847, G06F 3/04886, H04M 1/02

(54) **HAND GESTURE INTERACTION METHOD AND APPARATUS, AND TERMINAL DEVICE**
HANDGESTENINTERAKTIONSVERFAHREN UND GERÄT SOWIE ENDGERÄT
PROCÉDÉ ET APPAREIL D'INTERACTION PAR GESTE DE LA MAIN ET DISPOSITIF TERMINAL

(30) Priority: 18.09.2019 CN 201910881606
(43) Date of publication of application: 06.07.2022
(73) Proprietor: Huawei Technologies Co., Ltd., Longgang District Shenzhen, Guangdong 518129 (CN)
(72) Inventor: TIAN, Huajian, Shenzhen, Guangdong 518129 (CN); HUANG, Dezhi, Shenzhen, Guangdong 518129 (CN); YE, Xingyuan, Shenzhen, Guangdong 518129 (CN); CUI, Qingyu, Shenzhen, Guangdong 518129 (CN); GAO, Shuchao, Shenzhen, Guangdong 518129 (CN); CHEN, Xiaoxiao, Shenzhen, Guangdong 518129 (CN)
(74) Representative: Pfenning, Meinig & Partner mbB
(86) International application number: PCT/CN2020/113884
(87) International publication number: WO 2021/052214

(56) References cited:
- CN-A- 105 022 550
- CN-A- 107 765 968
- CN-A- 109 917 999
- CN-A- 110 531 864
- US-A1- 2014 101 576
- US-A1- 2014 198 036
- US-A1- 2014 375 660
- US-B1- 8 988 381
- US-B1- 8 988 381

## Description

### TECHNICAL FIELD

This application relates to the communication field, and in particular, to a gesture interaction method and apparatus, a readable storage medium and a computer program product.

### BACKGROUND

As forms of terminals are diversified, and terminals of various product forms such as foldable screens and irregular screens enter the market, a conventional man-machine interaction mode cannot meet users' requirement. For example, when a foldable screen is in a folded state for a terminal device having the foldable screen, there is an operable area in a foldable area of the foldable screen of the terminal device. However, an operation on a foldable area of a terminal device is limited currently, and no related function operation is specially designed for the foldable area. Therefore, how to design an interaction mode of a foldable area of a terminal device having a foldable screen to improve users' operation sense and operation experience becomes a problem to be resolved.

US 2014/0375660 A1 discloses an information processor, which includes an arithmetic device including an arithmetic unit and a storage unit that stores a program to be executed by the arithmetic unit and an input/output device including an input unit that can supply an operation instruction and a bend sensor that can supply bend data.

US 8, 988, 381 B1 discloses a mobile terminal including a terminal body that is configured to be deformable by an external force.

US 2014/0198036 A1 discloses an apparatus and method for controlling a portable apparatus including a flexible display.

US 2014/0101576 A1 discloses a multi display device to display a task screen through a multi-display.

CN 107 765 968 A discloses a task switching method and device.

CN 109 917 999 A discloses a display method for a terminal with a foldable display screen.

### SUMMARY

In order to solve the above-mentioned problem, this application provides a gesture interaction method according to claim 1, a gesture interaction apparatus according to claim 7 and a readable storage medium according to claim 12 and a computer program product according to claim 13. The gesture interaction method is applied to the terminal device having a foldable screen. The foldable screen of the terminal device in a folded state includes a first touch display area, a second touch display area, and a third touch display area, and the third touch display area is connected between the first touch display area and the second touch display area. According to the gesture interaction method, that an angle value of an included angle formed between the first touch display area and the second touch display area is less than a specified angle value may be determined; an input event that acts on the third touch display area may be obtained; and in response to the input event, the terminal device is triggered to execute an operation instruction corresponding to the input event. This helps enrich functions of the terminal device and improve operation and control experience of the terminal device.

According to a first aspect, an embodiment of this application provides a gesture interaction method, applied to a terminal device having a foldable screen. The foldable screen of the terminal device in a folded state includes a first touch display area, a second touch display area, and a third touch display area, and the third touch display area is between the first touch display area and the second touch display area. According to the method, that an angle value of an included angle formed between the first touch display area and the second touch display area is less than a specified angle value may be determined. In this case, it indicates that the terminal currently obtains an input event that acts on the third touch display area, and the terminal device is triggered to execute an operation instruction corresponding to the input event. According to the method, a problem of processing an input event of a user can be resolved when there is a touch response area in a foldable area of the terminal device having the foldable screen. This helps improve operation experience of the terminal device.

According to the first aspect, a gesture operation input by a user in the third touch display area is detected, so that the input event that acts on the third touch display area by the user is determined. Using this design helps determine the gesture operation performed by the user in the third touch display area.

In a possible design, the gesture operation input by the user in the third touch display area includes one or more of a single-hand holding operation, a two-hand holding operation, a tapping operation, a sliding operation, a pressing operation, a dragging operation, and a scaling operation.

In a possible design, the terminal device performs application callback registration for an application program that is being run at an application layer; determine an application operation instruction corresponding to the input event in response to the input event; and triggers, through callback invocation or broadcast notification, the application program that is being run at the application layer to execute the application operation instruction. Using this design may determine that the gesture operation of the user is an operation for the application program at the application layer, so that the application program at the application layer implements a corresponding function in response to the gesture operation of the user.

In a possible design, the terminal device may distribute the input event to an application at a system layer; and trigger, in response to the input event, the application at the system layer to execute a system operation instruction corresponding to the input event. Using this design may determine that the gesture operation of the user is an operation for a system, so that the system implements a corresponding system function in response to the gesture operation of the user.

According to the first aspect, the terminal device may obtain a feature parameter of the input event; and trigger, based on the feature parameter of the input event, a task associated with the first touch display area and/or the second touch display area to execute the operation instruction corresponding to the input event. When the foldable screen of the terminal device is in the folded state, using this design helps determine a specific touch display area, where the input event that is of the user and that acts on the foldable area is an operation for the area.

In a possible design, the operation instruction includes one or more of a screenshot instruction, a volume adjustment instruction, a page turning instruction, a window switching instruction, an instruction for opening or exiting an application program, or a fast forward or rewind instruction.

According to a second aspect, an embodiment of this application provides a gesture interaction apparatus. The apparatus has a function of implementing the gesture interaction method provided in the first aspect. The function may be implemented by hardware, or may be implemented by hardware executing corresponding software. The hardware or the software includes one or more modules corresponding to the foregoing function.

According to a third aspect, an embodiment of this application provides a terminal device. The terminal device includes a processor and a memory. The memory is configured to store a computer program, and the processor executes the computer program stored in the memory, so that the terminal device performs the method according to any one of the first aspect or the possible implementations of the first aspect.

According to a fourth aspect, an embodiment of this application provides a readable storage medium. The readable storage medium includes a program or instructions. When the program or the instructions is or are run on a computer, the computer is enabled to perform the method according to any one of the first aspect or the possible implementations of the first aspect.

The chip system in the foregoing aspects may be a system on chip (system on chip, SOC), may be a baseband chip, or the like. The baseband chip may include a processor, a channel encoder, a digital signal processor, a modem, an interface module, or the like.

### BRIEF DESCRIPTION OF DRAWINGS

To describe the technical solutions in embodiments of this application more clearly, the following briefly describes the accompanying drawings for describing embodiments. It is clear that the accompanying drawings in the following descriptions show merely some embodiments of this application, and a person of ordinary skill in the art may still derive other drawings from these accompanying drawings without creative efforts.
FIG. 1 is a schematic diagram of a structure of a terminal device according to an embodiment of this application;
FIG. 2a to FIG. 2c are schematic diagrams of different forms of a terminal device having a foldable screen;
FIG. 3 is a schematic diagram of a terminal device having an irregular screen;
FIG. 4a and FIG. 4b are diagrams of application scenarios of gesture interaction
FIG. 5 is a schematic diagram of a structure of a software system and a hardware layer of a terminal device according to an embodiment of this application;
FIG. 6 is a schematic flowchart of a gesture interaction method according to an embodiment of this application;
FIG. 7 is a schematic flowchart of converting an input event into a gesture event according to an embodiment of this application;
FIG. 8 is another schematic flowchart of converting an input event into a gesture event according to an embodiment of this application;
FIG. 9 is a schematic flowchart of a function operation corresponding to triggering of a gesture event according to an embodiment of this application;
FIG. 10 is a schematic flowchart of another function operation corresponding to triggering of a gesture event according to an embodiment of this application;
FIG. 11a is a schematic application diagram of a terminal device having a foldable screen according to an embodiment of this application;
FIG. 11b is a schematic application diagram of another terminal device having a foldable screen according to an embodiment of this application;
FIG. 12 is a schematic flowchart of another gesture interaction method according to an embodiment of this application;
FIG. 13 is a schematic diagram of a structure of a gesture interaction apparatus according to an embodiment of this application; and
FIG. 14 is a schematic diagram of a structure of another gesture interaction apparatus according to an embodiment of this application.

### DESCRIPTION OF EMBODIMENTS

The following describes the technical solutions in embodiments of this application with reference to the accompanying drawings in embodiments of this application.

The following describes embodiments of a terminal device and an implementation method of the terminal device. The terminal device may be a mobile phone (which is also referred to as a smart terminal device), a tablet computer (tablet personal computer), a personal digital assistant (personal digital assistant), an e-book reader (e-book reader), or a virtual reality interactive device (virtual reality interactive device). The terminal device may access various types of communication systems, for example, a long term evolution (long term evolution, LTE) system, a future 5th generation (5th Generation, 5G) system, a new radio access technology (new radio access technology, NR), and a future communication system such as a 6G system; or may access a wireless local area network (wireless local area network, WLAN) or the like.

For ease of description, a smart terminal device is used as an example for description in the following embodiments.

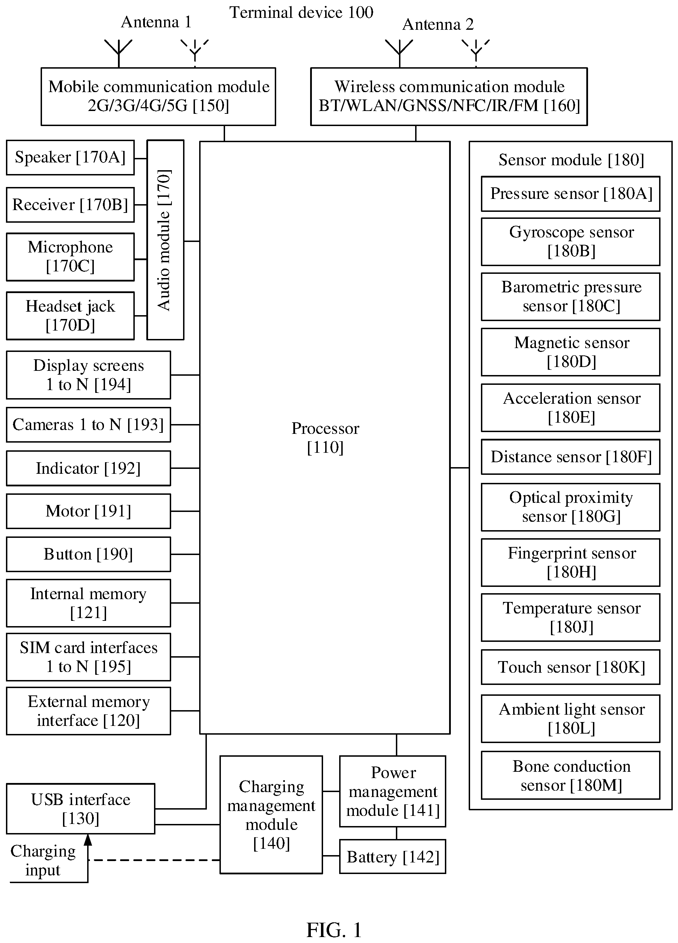

An embodiment of this application provides a schematic diagram of a structure of a terminal device. FIG. 1 is a schematic diagram of a structure of a terminal device 100. The terminal device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display screen 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that, a structure illustrated in this embodiment of this application does not constitute a specific limitation on the terminal device 100. In some other embodiments of this application, the terminal device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to complete control of instruction reading and instruction execution.

A memory may be further disposed in the processor 110, and is configured to store instructions and data. In an embodiment, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In an embodiment, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronous serial bus, and includes a serial data line (serial data line, SDA) and a serial clock line (serial clock line, SCL). In an embodiment, the processor 110 may include a plurality of groups of 12C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the terminal device 100.

The I2S interface may be used for audio communication. In an embodiment, the processor 110 may include a plurality of groups of I2S buses. The processor 110 may be coupled to the audio module 170 through the I2S bus, to implement communication between the processor 110 and the audio module 170. In an embodiment, the audio module 170 may transmit an audio signal to the wireless communication module 160 through the I2S interface, to implement a function of answering a call through a Bluetooth headset.

The PCM interface may also be used for audio communication, and sample, quantize, and code an analog signal. In an embodiment, the audio module 170 may be coupled to the wireless communication module 160 through a PCM bus interface. In an embodiment, the audio module 170 may also transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is used for asynchronous communication. The bus may be a two-way communication bus. The bus converts to-be-transmitted data between serial communication and parallel communication. In an embodiment, the UART interface is usually configured to connect the processor 110 to the wireless communication module 160. For example, the processor 110 communicates with a Bluetooth module in the wireless communication module 160 through the UART interface, to implement a Bluetooth function. In an embodiment, the audio module 170 may transmit an audio signal to the wireless communication module 160 through the UART interface, to implement a function of playing music through a Bluetooth headset.

The MIPI interface may be configured to connect the processor 110 to a peripheral component such as the display screen 194 or the camera 193. The MIPI interface includes a camera serial interface (camera serial interface, CSI), a display serial interface (display serial interface, DSI), or the like. In an embodiment, the processor 110 communicates with the camera 193 through the CSI interface, to implement a photographing function of the terminal device 100. The processor 110 communicates with the display screen 194 through the DSI interface, to implement a display function of the terminal device 100.

The GPIO interface may be configured by software. The GPIO interface may be configured as a control signal or a data signal. In an embodiment, the GPIO interface may be configured to connect the processor 110 to the camera 193, the display screen 194, the wireless communication module 160, the audio module 170, the sensor module 180, or the like. The GPIO interface may also be configured as the I2C interface, the I2S interface, the UART interface, the MIPI interface, or the like.

The USB interface 130 is an interface that conforms to a USB standard specification, and may be specifically a mini USB interface, a micro USB interface, a USB type-C interface, or the like. The USB interface 130 may be configured to connect to the charger to charge the terminal device 100, or may be configured to perform data transmission between the terminal device 100 and a peripheral device, or may be configured to connect to a headset for playing audio through the headset. The interface may alternatively be configured to connect to another terminal device, for example, an AR device.

It can be understood that, the interface connection relationship between the modules illustrated in this embodiment of this application is merely an example for description, and does not constitute a limitation on the structure of the terminal device 100. In some other embodiments of this application, the terminal device 100 may alternatively use an interface connection mode different from that in the foregoing embodiment, or use a combination of a plurality of interface connection modes.

The charging management module 140 is configured to receive a charging input from the charger. The charger may be a wireless charger or a wired charger. In an embodiment of wired charging, the charging management module 140 may receive a charging input from the wired charger through the USB interface 130. In an embodiment of wireless charging, the charging management module 140 may receive a wireless charging input through a wireless charging coil of the terminal device 100. When charging the battery 142, the charging management module 140 may further supply power to the terminal device through the power management module 141.

The power management module 141 is configured to connect to the battery 142, the charging management module 140, and the processor 110. The power management module 141 receives an input from the battery 142 and/or the charging management module 140, and supplies power to the processor 110, the internal memory 121, the display screen 194, the camera 193, the wireless communication module 160, and the like. The power management module 141 may be further configured to monitor parameters such as a battery capacity, a battery cycle count, and a battery health status (electric leakage or impedance). In an embodiment, the power management module 141 may alternatively be disposed in the processor 110. In another embodiment, the power management module 141 and the charging management module 140 may alternatively be disposed in a same device.

A wireless communication function of the terminal device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the terminal device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution, applied to the terminal device 100, for wireless communication including 2G, 3G, 4G, 5G, or the like. The mobile communication module 150 may include at least one filter, a switch, a power amplifier, a low noise amplifier (low noise amplifier, LNA), or the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In an embodiment, at least some function modules in the mobile communication module 150 may be disposed in the processor 110. In an embodiment, at least some function modules in the mobile communication module 150 may be disposed in a same device as at least some modules in the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video on the display screen 194. In an embodiment, the modem processor may be an independent device. In some other embodiments, the modem processor may be independent of the processor 110, and is disposed in a same device as the mobile communication module 150 or another function module.

The wireless communication module 160 may provide a wireless communication solution that is applied to the terminal device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, and an infrared (infrared, IR) technology. The wireless communication module 160 may be one or more components integrating at least one communication processing module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In an embodiment, the antenna 1 of the terminal device 100 is coupled to the mobile communication module 150, and the antenna 2 thereof is coupled to the wireless communication module 160, so that the terminal device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), the BT, the GNSS, the WLAN, the NFC, the FM, the IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), or a satellite based augmentation system (satellite based augmentation system, SBAS).

The terminal device 100 implements a display function through the GPU, the display screen 194, the application processor, and the like. The GPU is a microprocessor for image processing, and is connected to the display screen 194 and the application processor. The GPU is configured to: perform mathematical and geometric computation, and render an image. The processor 110 may include one or more GPUs that execute instructions to generate or change display information.

The display screen 194 is configured to display an image, a video, or the like. The display screen 194 includes a display panel. The display screen may specifically include a foldable screen, an irregular screen, or the like. The display panel may use a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In an embodiment, the terminal device 100 may include one or N display screens 194, where N is a positive integer greater than 1.

The terminal device 100 may implement a photographing function through the ISP, the camera 193, the video codec, the GPU, the display screen 194, the application processor, and the like.

The ISP is configured to process data fed back by the camera 193. For example, during photographing, a shutter is pressed, light is transmitted to a photosensitive element of the camera through a lens, an optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In an embodiment, the ISP may be disposed in the camera 193.

The camera 193 may be configured to capture a static image or a video. An optical image of an object is generated through the lens, and is projected to the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In an embodiment, the terminal device 100 may include one or N cameras 193, where N is a positive integer greater than 1.

The digital signal processor is configured to process a digital signal, and may process another digital signal in addition to the digital image signal. For example, when the terminal device 100 selects a frequency, the digital signal processor is configured to perform Fourier Transform on frequency energy.

The video codec is configured to compress or decompress a digital video. The terminal device 100 may support one or more types of video codecs. In this way, the terminal device 100 may play or record videos in a plurality of coding formats, for example, moving picture experts group (moving picture experts group, MPEG) 1, MPEG 2, MPEG 3, and MPEG 4.

The NPU is a neural-network (neural-network, NN) computing processor. The NPU quickly processes input information by referring to a structure of a biological neural network, for example, by referring to a mode of transfer between human brain neurons, and may further continuously perform self-learning. The NPU may be used to implement intelligent cognition of the terminal device 100 and other applications, for example, image recognition, facial recognition, voice recognition, and text understanding.

The external memory interface 120 may be configured to connect to an external storage card, for example, a micro SD card, to extend a storage capability of the terminal device 100. The external memory card communicates with the processor 110 through the external memory interface 120, to implement a data storage function. For example, data such as music, a photo, and a video is stored in the external memory card.

The internal memory 121 may be configured to store computer-executable program code. The executable program code includes instructions. The internal memory 121 may include a program storage area and a data storage area. The program storage area may store an operating system, an application program required by at least one function (for example, a voice playing function or an image playing function), and the like. The data storage area may store data (for example, audio data or a phone book) created in a process of using the terminal device 100. In addition, the internal memory 121 may include a high-speed random access memory, or may include a nonvolatile memory, for example, at least one magnetic disk storage device, a flash memory, or a universal flash storage (universal flash storage, UFS). The processor 110 runs the instructions stored in the internal memory 121 and/or the instructions stored in the memory disposed in the processor, to perform various function applications of the terminal device 100 and data processing.

The terminal device 100 may implement an audio function through the audio module 170, the speaker 170A, the receiver 170B, the microphone 170C, the headset jack 170D, the application processor, and the like, for example, implement a music playback function and a recording function.

The audio module 170 is configured to convert digital audio information into an analog audio signal for output, and is also configured to convert an analog audio input into a digital audio signal. The audio module 170 may further be configured to code and decode an audio signal. In an embodiment, the audio module 170 may be disposed in the processor 110, or some function modules in the audio module 170 are disposed in the processor 110.

The speaker 170A, also referred to as a "loudspeaker", is configured to convert an audio electrical signal into a sound signal. The terminal device 100 may be used to listen to music or listen to a hands-free call through the speaker 170A.

The receiver 170B, also referred to as an "earpiece", is configured to convert an audio electrical signal into a sound signal. When the terminal device 100 is used to answer a call or listen to voice information, a voice may be listened to by placing the receiver 170B close to a human ear.

The microphone 170C, also referred to as "mike" or "mic", is configured to convert a sound signal into an electrical signal. When making a call or sending voice information, a user may make a sound near the microphone 170C through the mouth of the user, to input a sound signal to the microphone 170C. At least one microphone 170C may be disposed in the terminal device 100. In some other embodiments, two microphones 170C may be disposed in the terminal device 100. In addition to collecting a sound signal, the microphones may further implement a noise reduction function. In some other embodiments, three, four, or more microphones 170C may be disposed in the terminal device 100, to collect a sound signal, reduce noise, identify a sound source, implement a directional recording function, and the like.

The headset jack 170D is configured to connect to a wired headset. The headset jack 170D may be a USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. In an embodiment, the pressure sensor 180A may be disposed on the display screen 194. There are many types of pressure sensors 180A, for example, a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The terminal device 100 determines pressure strength based on a capacitance change. When a touch operation is performed on the display screen 194, the terminal device 100 detects strength of the touch operation based on the pressure sensor 180A. The terminal device 100 may further calculate a touch location based on a detection signal of the pressure sensor 180A. In an embodiment, touch operations that are performed at a same touch location but have different touch operation strength may correspond to different operation instructions. For example, when a touch operation whose touch operation strength is less than a first pressure threshold is performed on an SMS message application icon, an instruction for viewing an SMS message is executed. When a touch operation whose touch operation strength is greater than or equal to the first pressure threshold is performed on the SMS message application icon, an instruction for creating an SMS message is executed.

The gyroscope sensor 180B may be configured to determine a motion posture of the terminal device 100. In an embodiment, angular velocities of the terminal device 100 around three axes (namely, x, y, and z axes) may be determined through the gyroscope sensor 180B. The gyroscope sensor 180B may be configured to perform image stabilization during photographing. For example, when the shutter is pressed, the gyroscope sensor 180B detects an angle at which the terminal device 100 jitters, calculates, based on the angle, a distance for which a lens module needs to compensate, and allows the lens to cancel the jitter of the terminal device 100 through reverse motion, to implement image stabilization. The gyroscope sensor 180B may be further used in a navigation scenario and a motion-sensing game scenario.

The barometric pressure sensor 180C is configured to measure barometric pressure. In an embodiment, the terminal device 100 calculates an altitude by using a barometric pressure value measured by the barometric pressure sensor 180C, to assist in positioning and navigation.

The magnetic sensor 180D includes a Hall sensor. The terminal device 100 may detect opening and closing of a flip cover through the magnetic sensor 180D. In an embodiment, when the terminal device 100 is a flip phone, the terminal device 100 can detect opening and closing of a flip cover based on the magnetic sensor 180D. Further, a feature such as automatic unlocking upon opening of the flip cover is set based on a detected opening or closing state of the flip cover.

The acceleration sensor 180E may detect magnitudes of accelerations of the terminal device 100 in various directions (generally three-axis). A magnitude and a direction of gravity may be detected when the terminal device 100 is stationary. The acceleration sensor may be further configured to identify a posture of the terminal device, and is used in an application such as switching between a landscape mode and a portrait mode or a pedometer.

The distance sensor 180F is configured to measure a distance. The terminal device 100 may measure a distance by using infrared light or a laser. In an embodiment, in a photographing scenario, the terminal device 100 may measure a distance through the distance sensor 180F, to implement fast focusing.

The optical proximity sensor 180G may include, for example, a light-emitting diode (LED) and an optical detector, for example, a photodiode. The light-emitting diode may be an infrared light-emitting diode. The terminal device 100 emits infrared light outwards through the light-emitting diode. The terminal device 100 detects infrared reflected light from a nearby object through the photodiode. When detecting plenty of reflected light, the terminal device 100 may determine that there is an object near the terminal device 100. When detecting inadequate reflected light, the terminal device 100 may determine that there is no object near the terminal device 100. The terminal device 100 may detect, through the optical proximity sensor 180G, that the user holds the terminal device 100 close to the ear for a call, to automatically turn off the screen to save power. The optical proximity sensor 180G may be further used in a smart cover mode or a pocket mode to automatically perform screen unlocking or locking.

The ambient light sensor 180L is configured to sense ambient light brightness. The terminal device 100 may adaptively adjust luminance of the display screen 194 based on the sensed ambient light brightness. The ambient light sensor 180L may also be configured to automatically adjust white balance during photographing. The ambient light sensor 180L may further cooperate with the optical proximity sensor 180G to detect whether the terminal device 100 is in a pocket, to prevent an accidental touch.

The fingerprint sensor 180H is configured to collect a fingerprint. The terminal device 100 may use a feature of the collected fingerprint to implement fingerprint-based unlocking, application lock access, fingerprint-based photographing, fingerprint-based call answering, and the like.

The temperature sensor 180J is configured to detect a temperature. In an embodiment, the terminal device 100 executes a temperature processing policy by using the temperature detected by the temperature sensor 180J. For example, when the temperature reported by the temperature sensor 180J exceeds a threshold, the terminal device 100 reduces performance of a processor located near the temperature sensor 180J, to reduce power consumption and implement heat protection. In some other embodiments, when the temperature is lower than another threshold, the terminal device 100 heats the battery 142, to avoid abnormal shutdown of the terminal device 100 caused by a low temperature. In some other embodiments, when the temperature is lower than still another threshold, the terminal device 100 boosts an output voltage of the battery 142, to avoid abnormal shutdown caused by a low temperature.

The touch sensor 180K is also referred to as a "touch panel". The touch sensor 180K may be disposed on the display screen 194, and the touch sensor 180K and the display screen 194 form a touchscreen, which is also referred to as a "touch screen". The touch sensor 180K is configured to detect a touch operation performed on or near the touch sensor 180K. The touch sensor may transfer the detected touch operation to the application processor to determine a type of the touch event. A visual output related to the touch operation may be provided through the display screen 194. In some other embodiments, the touch sensor 180K may alternatively be disposed on a surface of the terminal device 100 at a location different from that of the display screen 194.

In an embodiment, the touch screen including the touch sensor 180K and the display screen 194 may be located in a side area or a foldable area of the terminal device 100, and is configured to determine a touch location and a touch gesture of a user when a hand of the user touches the touch screen. For example, when holding the terminal device, the user may tap any location on the touch screen by using a thumb. In this case, the touch sensor 180K may detect a tap operation of the user, and transfer the tap operation to the processor, and the processor determines, based on the tap operation, that the tap operation is used to wake up the screen.

The bone conduction sensor 180M may obtain a vibration signal. In an embodiment, the bone conduction sensor 180M may obtain a vibration signal of a vibration bone of a human vocal-cord part. The bone conduction sensor 180M may also be in contact with a human pulse, and receive a blood pressure beating signal. In an embodiment, the bone conduction sensor 180M may alternatively be disposed in a headset, to obtain a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The terminal device 100 may receive a button input, and generate a button signal input related to a user setting and function control of the terminal device 100.

The motor 191 may generate a vibration prompt. The motor 191 may be used for an incoming call vibration prompt, or may be used for a touch vibration feedback. For example, touch operations performed on different applications (for example, a photographing application and an audio playing application) may correspond to different vibration feedback effects. The motor 191 may also correspond to different vibration feedback effects for touch operations performed on different areas of the display screen 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is used to connect to a SIM card. The SIM card may be inserted into the SIM card interface 195 or removed from the SIM card interface 195, to implement contact with or separation from the terminal device 100. The terminal device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may also be compatible with different types of SIM cards. The SIM card interface 195 may also be compatible with an external storage card. The terminal device 100 interacts with a network through the SIM card, to implement functions such as a call and data communication. In an embodiment, the terminal device 100 uses an eSIM, namely, an embedded SIM card. The eSIM card may be embedded in the terminal device 100, and cannot be separated from the terminal device 100.

With development of display screen technologies, when a terminal device uses an irregular screen or a foldable screen, a touch display screen of the terminal device may include a plurality of touch display areas. For example, the foldable screen of the terminal device in a folded state includes a foldable area, and the foldable area may also implement touch response.

However, in a conventional technology, an operation on a specific touch display area of a terminal device is limited, and there is no related operation dedicated to the specific touch display area. Based on this, an embodiment of this application provides a gesture interaction method. In the gesture interaction method, there is a touch response area in a side area or a foldable area of a terminal device, the terminal device may obtain an input event in the touch response area, and trigger, in response to the input event, the terminal device to execute an operation instruction corresponding to the input event, to implement a gesture operation in the side area or the foldable area of the terminal device, thereby improving operation and control experience of the terminal device.

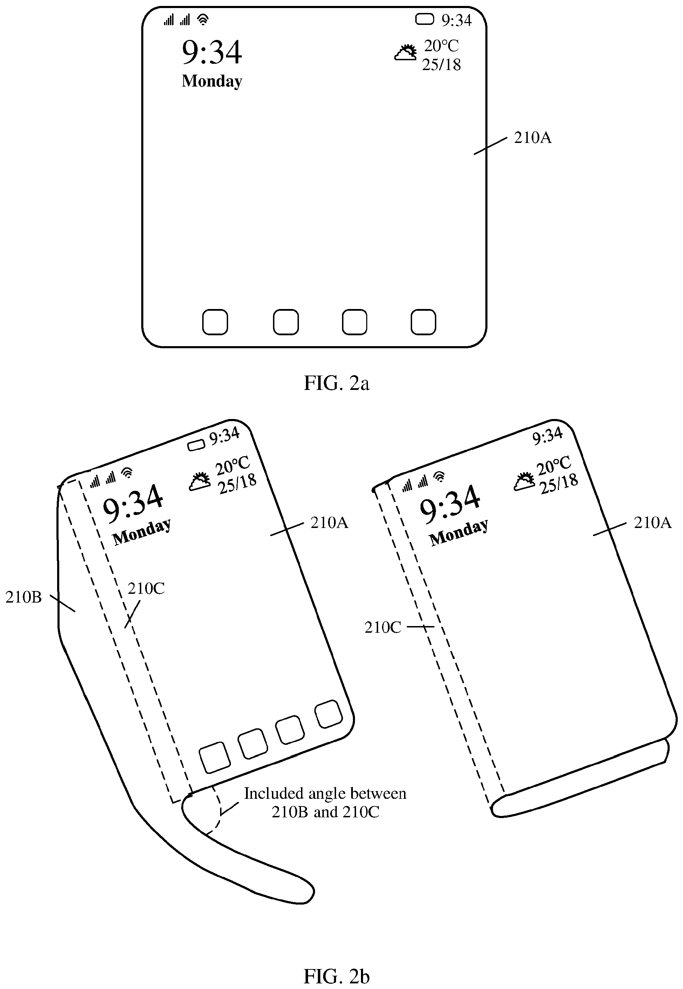

Embodiments shown in FIG. 2a to FIG. 2c provide different forms of a touch display screen of a terminal device, where the touch display screen of the terminal device may be a foldable screen, as shown in FIG. 2a and FIG. 2b. The foldable screen 200 of the terminal device may be in two different forms, including an unfolded form and a folded form. When the foldable screen 200 is in an unfolded form, as shown in FIG. 2a, the foldable screen 200 in the unfolded form includes a touch display area 200A, and a user may input a gesture operation in the touch display area 200A. For example, the user may tap an icon of an application program in the touch display area, and the terminal device displays a corresponding user interface of the application program in the touch display area in response to the gesture operation.

When the foldable screen 200 is in a folded form, as shown in FIG. 2b, the foldable screen 200 in a folded state includes a first touch display area 210A, a second touch display area 210B, and a third touch display area 210C. The first touch display area 210A may be one side watched by a user when the user uses the terminal device, the second touch display area 210B may be an opposite side of the first touch display area 210A of the foldable screen in the folded state, and the third touch display area 210C is a connection side connecting the first touch display area 210A to the second touch display area 210B of the foldable screen 200 in the folded state, as shown in FIG. 2b.

When the foldable screen 200 is in the folded state, and an angle value of an included angle formed between the first touch display area 210A and the second touch display area 210B is less than a specified angle value, for example, when the included angle formed between the first touch display area 210A and the second touch display area 210B is less than 60 degrees, it is determined that the foldable screen 200 is in the folded state. Optionally, after the foldable screen 200 is completely folded, to be specific, the included angle formed between the first touch display area 210A and the second touch display area 210B is approximately equal to 0 degrees, the foldable screen is shown on the right side of FIG. 2b.

When the foldable screen 200 is in the folded form, the formed third touch display area 210C may obtain an input event (for example, obtain a gesture operation of the user) that is of the user and that acts on the area. For example, a finger of the user may slide upwards or downwards in the third touch display area, and the terminal device may adjust a system volume in response to the gesture operation.

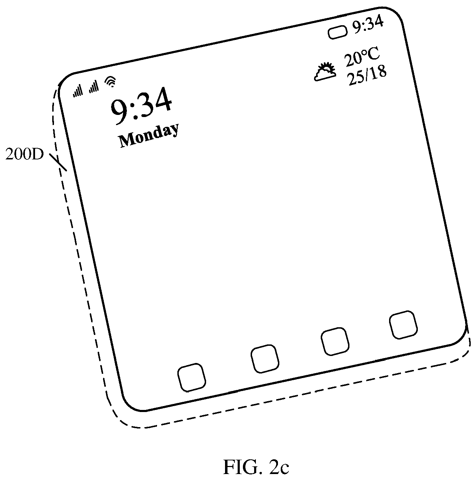

Optionally, the third touch display area 200D of the foldable screen 200 may further include a side area of the terminal device. For example, when the foldable screen 200 is in the unfolded form, the third touch display area 200D located on a side of the terminal device is shown in FIG. 2c, and the third touch display area is an area encircled by dashed lines in FIG. 2c. The third touch display area 200D may obtain an input event (for example, obtain a gesture operation of the user) that is of the user and that acts on the area. It may be understood that the side area of the terminal device shown in FIG. 2c is an example, and the third touch display area located on the side of the terminal device may alternatively include another side area. This is not limited in this embodiment. The embodiment as shown in Fig. 2c is not an embodiment of the invention.

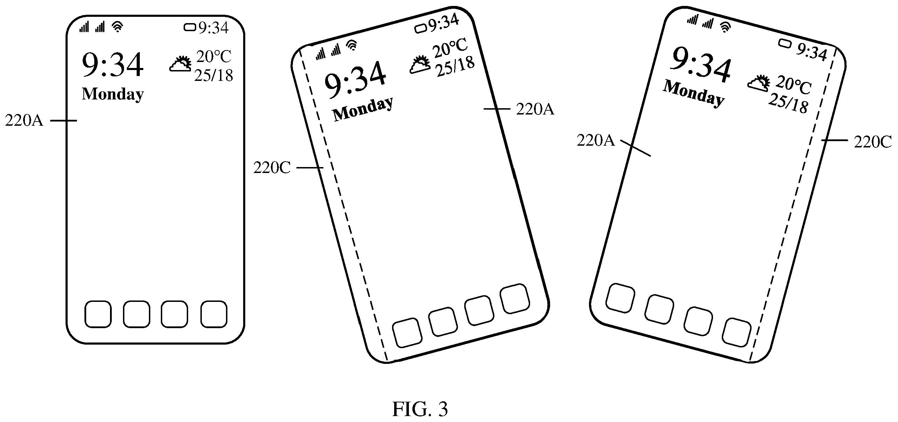

Optionally, the touch display screen of the terminal device may alternatively be an irregular screen. As shown in FIG. 3, the irregular screen includes a first touch display area 300A of the terminal device, and a second touch display area 300B and a third touch display area 300C on two sides of the first touch display area 300A.

The first touch display area 300A may be a side watched by a user when the user uses the terminal device, and the second touch display area 300B and the third touch display area 300C on the two sides are two sides on which the user holds the terminal device when watching the first touch display area 300A, as shown in FIG. 3. The embodiment as shown in Fig. 3 is not an embodiment of the invention.

The second touch display area 300B and the third touch display area 300C may obtain an input event (for example, obtain a gesture operation of the user) that is of the user and that acts on the areas. For example, when the user holds the terminal device with one hand, a thumb of the user may tap the second touch display area 300B for two consecutive times, and the terminal device may take a screenshot of the first touch display area 300A in response to the gesture operation. It may be understood that the second touch display area 300B and the third touch display area 300C may be flat, or may be an arched side extending from the first touch display area 300A toward two sides.

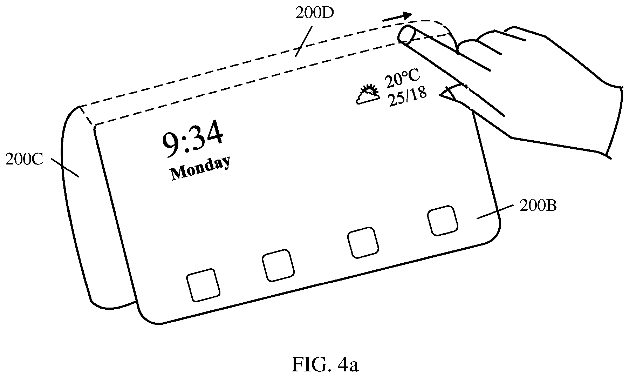

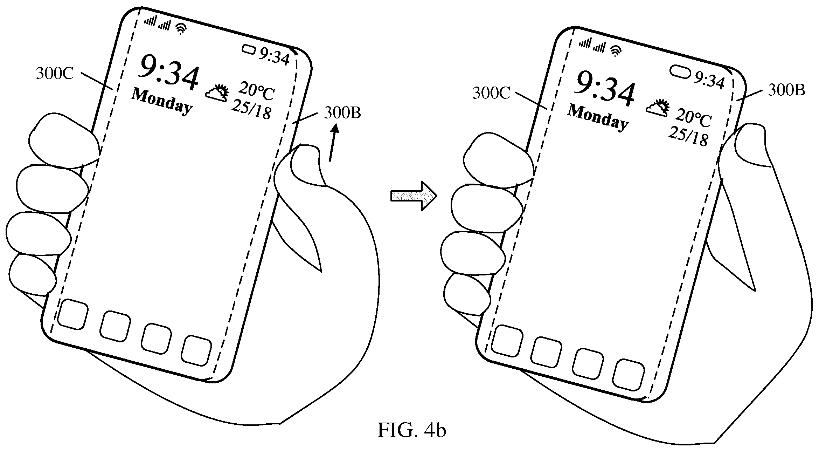

Based on the foregoing descriptions of different forms of the touch display screen of the terminal device, embodiments shown in FIG. 4a and FIG. 4b provide application scenarios in which a user holds a terminal device for gesture interaction. Gesture interaction modes in embodiments include a holding mode and a gesture trigger mode.

The holding mode indicates a mode in which a user holds the terminal device, which may be a single-hand holding mode or a two-hand holding mode. For example, when holding the terminal device with one hand, the user triggers, by using a finger, a touch panel (touch panel, TP) response area of the terminal device to trigger a gesture operation.

The gesture trigger mode indicates a gesture operation performed by a user on the touch display screen, and the gesture operation may include but is not limited to a sliding operation, a pressing operation, a tapping operation, a dragging operation, a scaling operation, and the like.

A parameter of the sliding operation may include but is not limited to a quantity of fingers during sliding, a sliding distance, a sliding speed, and the like. For example, the gesture operation triggered by the user in the TP response area is that the user slides, by using a finger, for 10 millimeters in the third touch area 210C shown in FIG. 2b.

A parameter of the pressing operation may include but is not limited to a quantity of fingers during pressing, a finger pressing force, and the like. For example, when the user firmly presses the third touch display area 210C shown in FIG. 2b, the touch display area may detect that the gesture operation of the user is a pressing operation.

A parameter of the tapping operation may include but is not limited to a quantity of taps, a tapping speed, and the like. For example, when the user continuously taps the third touch display area 210C shown in FIG. 2b for a plurality of times within a preset time period, the touch display area may detect that the gesture operation of the user is a continuous tapping operation.

A parameter of the dragging operation may include but is not limited to a dragging distance, a dragging speed, and the like. For example, the user may drag an icon in the first touch display area 200A shown in FIG. 2a to change a location of the icon in the touch display area.

A parameter of the scaling operation may include but is not limited to a quantity of fingers during scaling, a scaling range, and the like. For example, the user may perform, in the first touch display area 200A shown in FIG. 2a, a scaling operation in the touch display area using a thumb and an index finger.

Based on the foregoing descriptions of the gesture interaction manner, the following uses the foldable screen in FIG. 2b as an example to describe a scenario in which a user holds a terminal device for gesture interaction, as shown in FIG. 4a. FIG. 4a shows an application scenario in which a user inputs a gesture operation in a third touch display area 200D when the foldable screen is in a folded form. In this application scenario, a first touch display area 200B of the foldable screen faces the user, a second touch display area 200C is located on the back side of the first touch display area 200D in a folded state, and the third touch display area 200D connects the first touch display area 200B to the second touch display area 200C, as shown in FIG. 4a. If there is a TP response area in the third touch display area 200D, the third touch display area 200D may obtain a gesture operation performed by the user in the area. For example, the gesture operation performed by the user in the third touch display area 200D is sliding rightwards for 10 millimeters in the TP response area in the third touch display area 200D, as shown in FIG. 4a.

The following uses the irregular screen in FIG. 3 as an example to describe a scenario in which a user holds a terminal device for gesture interaction, as shown in FIG. 4b. In FIG. 4b, in a scenario in which the user holds the terminal device with one hand (the right hand), there is a TP response area in a second touch display area 300B and a third touch display area 300C of the irregular screen. In this case, it may be detected that gesture interaction between the user and the terminal device in this scenario is holding the terminal device with one hand. For example, the user holds the terminal device with the right hand and slides upwards in the TP response area of the second touch display area 300B by using the thumb. In this case, the second touch display area 300B detects, by using the TP response area, that gesture interaction between the user and the terminal device in this scenario is holding the terminal device with one hand and sliding upwards in the second touch display area 300B. The embodiment as shown in Fig. 4b is not an embodiment of the invention.

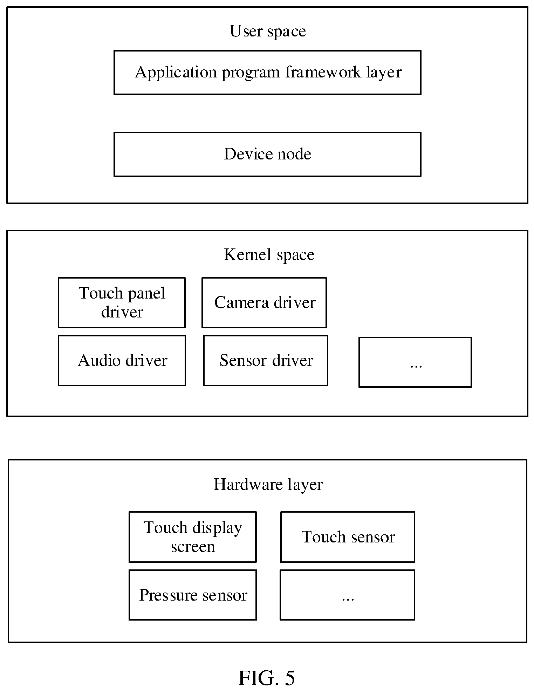

The following describes structures of a software system and a hardware layer of a terminal device by using examples with reference to the scenarios in which the user holds the terminal device for gesture interaction shown in FIG. 4a and FIG. 4b. Refer to FIG. 5. The software system and the hardware layer of the terminal device mainly include the following three modules: a hardware layer, kernel space, and user space.

The hardware layer is configured to generate a corresponding hardware interrupt signal based on a user operation. The hardware layer may include but is not limited to a touch display screen, a sensor, and the like. The kernel space is used to receive and report hardware interrupt information generated by the hardware layer, generate an input event based on the hardware interrupt information, and upload the input event to the user space. The kernel space may include a plurality of drivers, for example, a TP driver and a sensor driver. The user space is used to read, process, and distribute an input event, and the user space includes a device node, an application program framework layer, and the like. The device node is a hub connecting to the kernel space and the user space. The following specifically describes a software and hardware working procedure in which a user holds the terminal device for gesture interaction. The following steps may be included.

A corresponding hardware interrupt signal is generated when a gesture operation input by the user is received in a TP response area in a touch display screen of the hardware layer, and the hardware interrupt signal is sent to the kernel space.

After receiving the hardware interrupt signal, the kernel space may process the hardware interrupt signal into an input event, and report the input event to the user space, where the input event includes information such as touch coordinates and a time stamp of a touch operation.

The device node in the user space may obtain the input event, and then process the input event through the application program framework layer, to respond to the gesture operation input by the user.

The foldable screen in FIG. 4a is used as an example. The user inputs a gesture operation in the third touch display area, where the gesture operation is pressing and holding for two seconds and sliding downwards. In this case, the hardware layer generates a corresponding hardware interrupt signal, and sends the hardware interrupt signal to the kernel space. After receiving the hardware interrupt signal, the kernel space processes the hardware interrupt signal into an input event, where the input event includes that a trigger area of the gesture operation is the third touch display area, and gesture types are a pressing operation and a sliding operation. After obtaining the input event, the user space invokes the application program framework layer, and if it is detected that no application is currently being run on the terminal device, the user space triggers a system behavior, where the system behavior corresponding to the input event is unlocking the screen. The terminal device unlocks the screen in response to the input event.

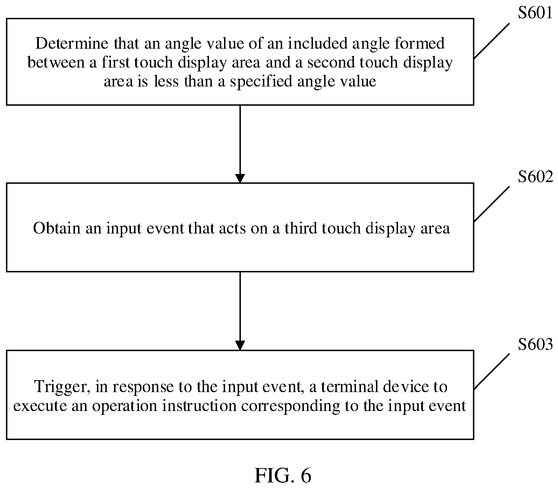

The following describes in detail a gesture interaction method provided in an embodiment of this application. Refer to FIG. 6. The gesture interaction method may be applied to a terminal device having a foldable screen or an irregular screen. The method may specifically include the following steps.

S601: Determine that an angle value of an included angle formed between a first touch display area and a second touch display area is less than a specified angle value.

When a touch display screen of the terminal device is a foldable screen, the foldable screen of the terminal device in a folded state includes a first touch display area, a second touch display area, and a third touch display area, and the third touch display area is between the first touch display area and the second touch display area. For example, when the foldable screen of the terminal device shown in FIG. 2b is in the folded state, the third touch display area 200D is between the first touch display area 200B and the second touch display area 200C.

When the angle value of the included angle formed between the first touch display area and the second touch display area is less than the specified angle value, it may be determined that the foldable screen of the terminal device is in the folded state. For example, when the included angle between the first touch display area and the second touch display area is less than 60 degrees, it may be determined that the foldable screen of the terminal device is in the folded state. It may be understood that the third touch display area is a foldable area generated when the foldable screen of the terminal device is in the folded state, and the foldable area may be used to obtain an input event of a user.

Optionally, when a touch display screen of the terminal device is an irregular screen, a third touch display area of the terminal device may be a side area of the irregular screen, for example, a touch display area 300B and/or a touch display area 300C on two sides of the terminal device shown in FIG. 3.

S602: Obtain an input event that acts on the third touch display area.

The third touch display area includes a TP response area, and the TP response area is used to detect a gesture operation input by the user in the third touch display area. The gesture operation input by the user may include but is not limited to a sliding operation, a pressing operation, a tapping operation, a dragging operation, a scaling operation, and the like.

For example, the third touch display area 200D shown in FIG. 4a may be used to detect the gesture operation (such as the sliding operation or the pressing operation) input by the user. The gesture operation input by the user may be collected by a touch sensor. For example, the TP response area triggers the touch sensor at a hardware layer to collect the gesture operation input by the user, and the hardware layer generates a corresponding hardware interrupt signal based on the collected gesture operation.

Optionally, after generating the corresponding hardware interrupt signal, the hardware layer may transmit the hardware interrupt signal to kernel space. After obtaining the hardware interrupt signal, the kernel space may determine, based on the gesture operation corresponding to the hardware interrupt signal, the input event that is of the user and that acts on the third touch display area, where the input event includes parameters such as an event type, event trigger time, and operation data.

For example, when the TP response area detects that the user performs the gesture operation in the third touch display area, assuming that the gesture operation is that a finger of the user slides rightwards for 10 millimeters in a specified area in the third touch display area 200D of the foldable screen in FIG. 4a, the touch sensor generates the corresponding hardware interrupt signal and transmits the hardware interrupt signal to the kernel space. The kernel space generates the input event based on the hardware interrupt signal, where the event type of the input event is a sliding operation, the event trigger time is one second, and the operation data is sliding rightwards for 10 millimeters.

Optionally, after receiving the input event, the kernel space encapsulates the input event. Encapsulating the input event may be that the kernel space directly converts the input event into a gesture event; or the kernel space reports the input event to user space, and then the user space converts the input event into a gesture event.

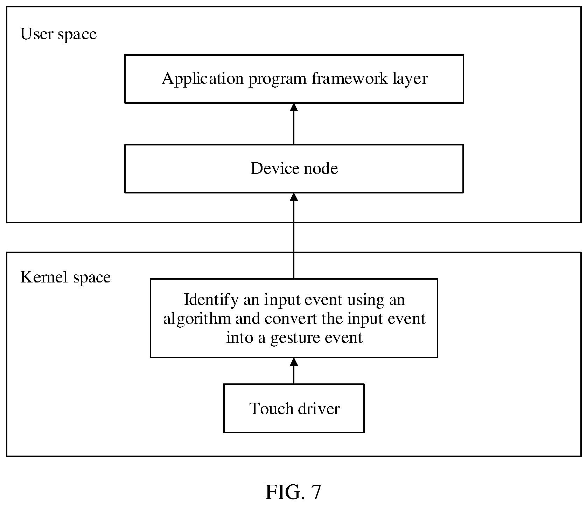

The gesture event is an event that can be read and processed by the kernel space or the user space, and includes the gesture operation and an object that responds to the gesture operation. In a feasible implementation, the kernel space may directly convert the input event into the gesture event. Related software modules include the kernel space and the user space. As shown in FIG. 7, the following steps may be specifically included.

s11: The kernel space identifies the input event using an algorithm, and converts the input event into the gesture event.

s12: The kernel space reports the gesture event to the user space.

After receiving the input event, a TP driver of the kernel space inputs the input event to an algorithm identification module of the kernel space. The algorithm identification module may identify the input event using the algorithm (such as a matching algorithm or a neural network-based algorithm), determine an event type, event trigger time, touch data, and the like of the input event, and convert the input event into the gesture event.

For example, when the event type included in the input event is sliding-based triggering, the event trigger time is one second, and the touch data is sliding upwards for 10 millimeters, the kernel space identifies the input event using the algorithm, and converts the input event into the gesture event, where the gesture event includes that the gesture operation is that a finger of the user slides upwards for 10 millimeters in a touch response area, and an object that responds to the gesture operation is an operating system.

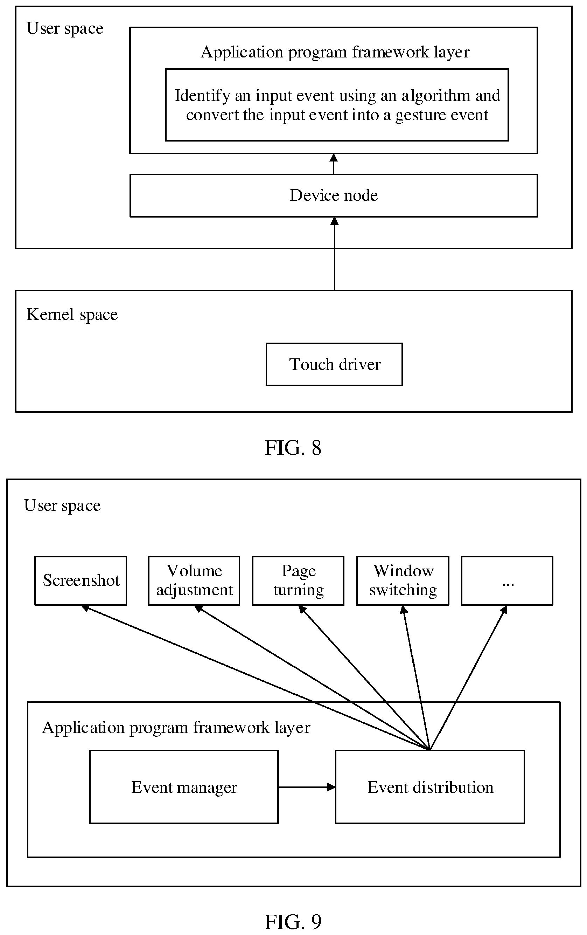

In another feasible implementation, the kernel space may report the input event to the user space, and then the user space converts the input event into the gesture event. Related software modules include the kernel space and the user space. As shown in FIG. 8, the following steps may be specifically included.

s21: The kernel space reports the input event to the user space.

s22: The user space identifies the input event using an algorithm, and converts the input event into the gesture event.

After receiving the input event, the kernel space does not perform a related operation on the input event, but directly reports the input event to the user space. An application program framework layer of the user space may identify the input event using the algorithm, determine an event type, event trigger time, touch data, and the like of the input event, and convert the input event into the gesture event.

The gesture event includes the gesture operation and an object that responds to the gesture operation. For example, when the event type included in the input event is tapping-based triggering, the event trigger time is one second, and the touch data is two continuous taps, the user space identifies the input event using the algorithm, and converts the input event into the gesture event, where the gesture event includes that the gesture operation is that a finger of the user taps a touch response area for two consecutive times, and the object that responds to the gesture operation is an operating system.

It may be understood that, different from the embodiment shown in FIG. 7 in which the kernel space identifies the input event using the algorithm and converts the input event into the gesture event, in this embodiment shown in FIG. 8, the user space identifies the input event using the algorithm and converts the input event into the gesture event. Processing procedures are different in the two embodiments, but obtained results both are that the gesture event is determined by the user space, to further execute a function operation corresponding to the gesture event in response to the gesture event.

S603: Trigger, in response to the input event, the terminal device to execute an operation instruction corresponding to the input event.

After obtaining the input event that acts on the third touch display area, the terminal device may trigger the terminal device to execute the corresponding operation instruction. The terminal device may execute the corresponding operation instruction based on parameters such as an event type, event trigger time, and operation data of the input event. The operation instruction may include but is not limited to operations such as a screenshot instruction, a volume adjustment instruction, a page turning instruction, a window switching instruction, an instruction for opening or exiting an application program, or a fast forward or rewind instruction.

For example, when the input event is an operation of two consecutive taps, the corresponding operation instruction is the screenshot instruction. The operation instruction corresponding to the input event may be a system operation instruction for a system layer application, or an application operation instruction for an application program at an application layer.

If there is an application program that is currently being run on the terminal device, S603 may specifically include the following steps:
performing application callback registration for the application program that is being run at an application layer;
determining an application operation instruction corresponding to the input event in response to the input event; and
triggering, through callback invocation or broadcast notification, the application program that is being run at the application layer to execute the application operation instruction.

If there is no application program that is currently being run on the terminal device, S603 may specifically include the following steps:
distributing the input event to an application at a system layer; and
triggering, in response to the input event, the application at the system layer to execute a system operation instruction corresponding to the input event.

When there is the application program that is being run on the terminal device, it may be determined that the input event is an operation for the application program that is being run. In this case, the application operation instruction corresponding to the input event is determined based on the input event, and the application program that is being run is triggered to execute the corresponding application operation instruction.

For example, if the input event is an operation of two continuous taps, and an application program that is currently being run on the terminal device is a video playing application program, an application operation instruction corresponding to the input event is a video screenshot instruction, and the terminal device triggers the video playing application program to perform a video screenshot operation to obtain a screenshot of a video that is currently being played.

When there is no application program that is being run on the terminal device, it may be determined that the input event corresponds to the system operation instruction of the application at the system layer. In this case, the application at the system layer is triggered, based on the input event, to execute the corresponding system operation instruction. For example, the input event is pressing and holding for two seconds and sliding for 10 millimeters along a longer side of the third touch display area, and the terminal device detects that no application program is currently being run. In this case, it is determined that the system operation instruction corresponding to the input event is unlocking a screen, and a system of the terminal device unlocks the screen to display a user interface.

Specifically, the user space in a software system of the terminal device may distribute the gesture event converted from the input event, to trigger the function operation corresponding to the gesture event. The distribution of the gesture event may directly trigger a system behavior based on a type of the gesture event and information about the gesture event, or trigger a customized behavior of an application through application registration callback.

In a feasible implementation, when the user space triggers, in response to the gesture event, the system behavior, a related software module includes the user space. As shown in FIG. 9, the following steps may be included.

s31: The application program framework layer distributes the gesture event.

s32: The application program framework layer triggers the system behavior based on the type of the gesture event and the information about the gesture event.

An event manager may manage the gesture event, and the system behavior is directly distributed by the application program framework layer to perform a corresponding function operation. For example, if the gesture event is firmly pressing and then tapping once, the function operation corresponding to the gesture event is a window switching operation. For another example, if the gesture event is slowly sliding downwards for 10 millimeters, the function operation corresponding to the gesture event is a volume decrease operation.

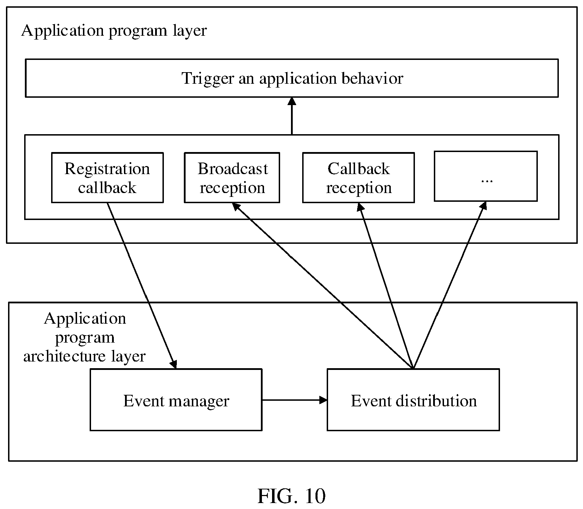

In another feasible implementation, when the user space triggers, in response to the gesture event, the customized behavior of the application through application registration callback, related software modules include the user space and the application program layer. As shown in FIG. 10, the following steps may be included.

s41: The application program layer adds the application to the application program layer according to an application registration callback mechanism.

s42: The application program framework layer indicates the application to trigger an application behavior.

s43: The application at the application layer executes a corresponding function operation.

The application registration callback mechanism is used. First, the application program layer submits registration information to an event manager at the application program architecture layer. Then, when triggering, in response to the gesture event, the application behavior, the application program framework layer notifies, through callback invocation, broadcast notification, or the like, the application to trigger the customized behavior of the application.

For example, when the gesture event is that a finger firmly presses for two seconds and then slides downwards for 10 millimeters, the user space identifies that the gesture operation is used to trigger a camera application. In this case, the camera application is started by invoking an interface of the application program framework layer, and then a camera driver is started by invoking the kernel space, to capture an image or a video through the camera.

When the terminal device uses the foldable screen, and the foldable screen is in the folded state, because there are the first touch display area and the second touch display area, when the input event that acts on the third touch display area is detected, it needs to be determined that the operation instruction corresponding to the input event is an operation instruction specific to a touch control display area. S603 specifically includes the following steps:
obtaining a feature parameter of the input event, where the feature parameter includes one or more of a pressing force, a sliding direction, an action location, and a quantity of touch times; and
triggering, based on the feature parameter of the input event, a task associated with the first touch display area and/or the second touch display area to execute the operation instruction corresponding to the input event.

When detecting the input event that acts on the third touch display area, the terminal device may obtain the feature parameter of the input event. The feature parameter of the input event is used to indicate a touch display area for which a gesture operation is specifically performed when the user inputs the gesture operation in the third touch display area.

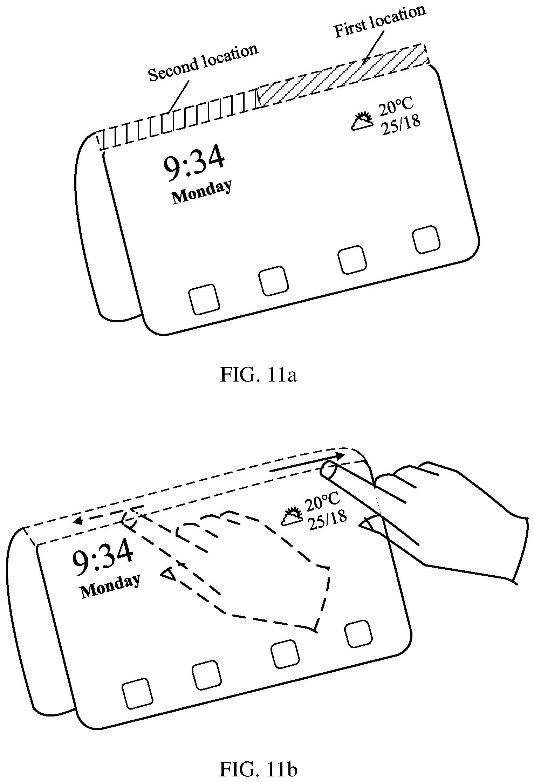

The feature parameter of the input event may include but is not limited to the pressing force, the sliding direction, the action location, the quantity of touch times, and the like. For example, the terminal device may preset that the input event that is of the user and that acts on a first location of the third touch display area is used to trigger execution of a corresponding operation instruction for a task associated with the first touch display area, and that the input event that is of the user and that acts on a second location of the third touch display area is used to trigger execution of a corresponding operation instruction for a task associated with the first touch display area, as shown in FIG. 11a. For another example, the terminal device may preset that when the user faces the first touch display area, sliding rightwards in the third touch display area is used to trigger execution of a corresponding operation instruction for a task associated with the first touch display area, and sliding leftwards in the third touch display area is used to trigger execution of a corresponding operation instruction for a task associated with the second touch display area, as shown in FIG. 11b.

A target touch display area may be determined based on the feature parameter of the input event, to further trigger the terminal device to execute, for a task associated with the target touch display area, the operation instruction corresponding to the input event. The task associated with the target touch display area includes an application program that is being run and displayed in the target touch display area. For example, the task associated with the target touch display area may be that a video application program is playing a video.

For example, the task associated with the first touch display area of the current terminal device is that a music application program is playing music, and a task associated with the second touch display area is performing instant messaging with another WeChat user through a WeChat application program. Assuming that the user receives, in a process of using WeChat, a video call request sent by another WeChat user, the user needs to decrease volume of music that is being played, so that the call of the user is not interfered by the music. In this case, the user may input a gesture operation in the first location of the third touch display area, for example, sliding leftwards for 10 millimeters in the first location. The terminal device determines the target touch display area as the first touch display area based on the input event and the feature parameter of the input event, and triggers the terminal device to decrease volume of music being played by the music application program.

It can be learned that this embodiment of this application provides the gesture interaction method. In the gesture interaction method, there is the touch response area in the side area or the foldable area of the terminal device, the input event in the touch response area is obtained, the input event is converted into the gesture event, and then the corresponding operation is triggered based on the gesture event, to implement the gesture operation in the side area or the foldable area of the terminal device, thereby improving operation and control experience of the terminal device.

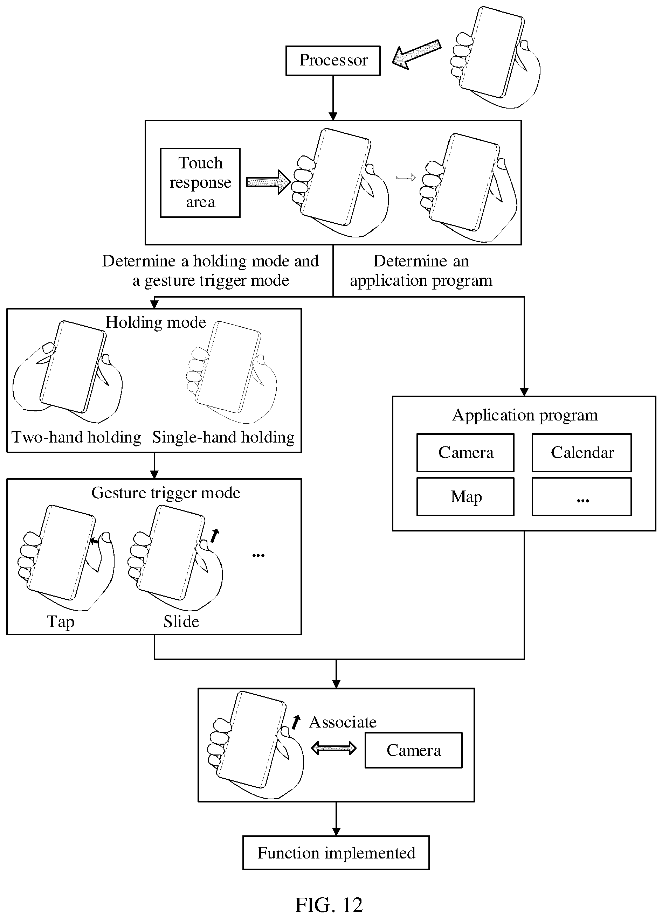

With reference to the descriptions in the embodiment shown in FIG. 6, FIG. 12 is a schematic flowchart of a gesture interaction method operated on a terminal device according to an embodiment. A mobile phone having an irregular screen is used as an example. When a user holds the mobile phone with one hand, a processor controls a touch response area to perform sensing. The processor identifies a gesture in the touch response area, and determines a holding mode and a gesture trigger mode of a finger of the user on a side screen of the mobile phone. For example, the user holds the mobile phone with one hand, and a finger slides upwards or downwards on the side screen. After a gesture operation performed by the finger of the user on the side screen is determined, an application program that is currently being run is detected. For example, if it is detected that the application program that is currently being run is a camera application, the gesture operation of the user is associated with the current application program, and if it is determined that a predefined operation corresponding to the gesture event is adjusting a focal length, the camera application is invoked to perform the operation, and the focal length of a current camera lens is adjusted, to implement a focal length adjustment function.

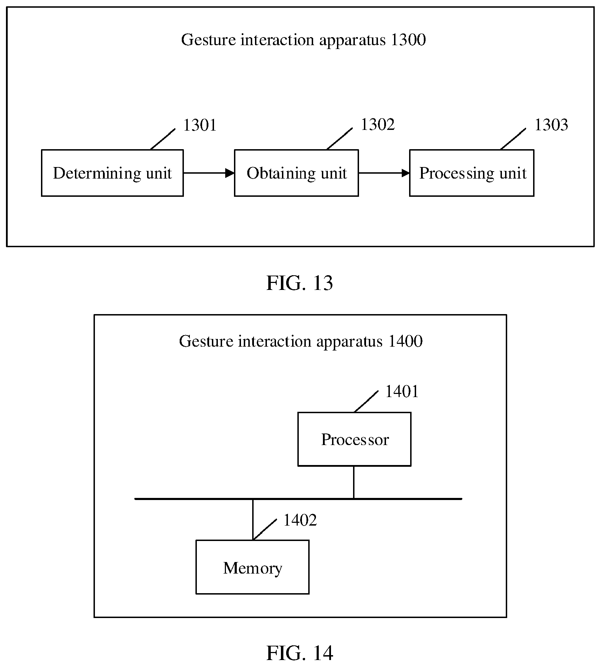

An embodiment of this application provides a gesture interaction apparatus, as shown in FIG. 13. The gesture interaction apparatus 1300 may be configured to execute the gesture interaction method in FIG. 6, and include:
a determining unit 1301, configured to determine that an angle value of an included angle formed between the first touch display area and the second touch display area is less than a specified angle value;
an obtaining unit 1302, configured to obtain an input event that acts on the third touch display area; and
a processing unit 1303, configured to trigger, in response to the input event, the terminal device to execute an operation instruction corresponding to the input event.

In an implementation, the third touch display area includes a side area of the terminal device.

In an implementation, the obtaining unit 1302 may be specifically configured to:
detect a gesture operation input by a user in the third touch display area; and
determine, based on the gesture operation, the input event that is of the user and that acts on the third touch display area.

In an implementation, the gesture operation includes one or more of a single-hand holding operation, a two-hand holding operation, a tapping operation, a sliding operation, a pressing operation, a dragging operation, and a scaling operation.

In an implementation, the processing unit 1303 may be specifically configured to:
perform application callback registration for an application program that is being run at an application layer;
determine an application operation instruction corresponding to the input event in response to the input event; and
trigger, through callback invocation or broadcast notification, the application program that is being run at the application layer to execute the application operation instruction.

In an implementation, the processing unit 1303 may be specifically configured to:
distribute the input event to an application at a system layer; and
trigger, in response to the input event, the application at the system layer to execute a system operation instruction corresponding to the input event.

In an implementation, the processing unit 1303 is further configured to:
obtain a feature parameter of the input event, where the feature parameter includes one or more of a pressing force, a sliding direction, an action location, and a quantity of touch times; and
trigger, based on the feature parameter of the input event, a task associated with the first touch display area and/or the second touch display area to execute the operation instruction corresponding to the input event.

In an implementation, the operation instruction includes one or more of a screenshot instruction, a volume adjustment instruction, a page turning instruction, a window switching instruction, an instruction for opening or exiting an application program, or a fast forward or rewind instruction.

An embodiment of this application provides another gesture interaction apparatus, as shown in FIG. 14. The gesture interaction apparatus 1400 may include a processor 1401. Related functions implemented by the determining unit 1301, the obtaining unit 1302, and the processing unit 1303 shown in FIG. 13 may all be implemented by the processor 1401. The processor 1401 may include one or more processors. For example, the processor 1401 may be one or more central processing units (central processing units, CPUs), one or more network processors (network processor, NP), one or more hardware chips, or any combination thereof. When the processor 1301 is one CPU, the CPU may be a single-core CPU, or may be a multi-core CPU.

The gesture interaction apparatus 1400 may further include a memory 1402. The memory 1402 is configured to store program code and the like. The memory 1402 may include a volatile memory (volatile memory), for example, a random access memory (random access memory, RAM); or the memory 1402 may include a non-volatile memory (non-volatile memory), for example, a read-only memory (read-only memory, ROM), a flash memory (flash memory), a hard disk drive (hard disk drive, HDD), or a solid-state drive (solid-state drive, SSD); or the memory 1402 may include a combination of the foregoing types of memories.

The processor 1401 and the memory 1402 may be configured to implement the gesture interaction method in FIG. 6. The processor 1401 is configured to: determine that an angle value of an included angle formed between a first touch display area and a second touch display area is less than a specified angle value;
obtain an input event that acts on a third touch display area; and
trigger, in response to the input event, a terminal device to execute an operation instruction corresponding to the input event.

In an implementation, the third touch display area includes a side area of the terminal device.

In an implementation, the processor 1401 may be specifically configured to:
detect a gesture operation input by a user in the third touch display area; and
determine, based on the gesture operation, the input event that is of the user and that acts on the third touch display area.

In an implementation, the gesture operation includes one or more of a single-hand holding operation, a two-hand holding operation, a tapping operation, a sliding operation, a pressing operation, a dragging operation, and a scaling operation.

In an implementation, the processor 1401 may be specifically configured to:
perform application callback registration for an application program that is being run at an application layer;
determine an application operation instruction corresponding to the input event in response to the input event; and
trigger, through callback invocation or broadcast notification, the application program that is being run at the application layer to execute the application operation instruction.

In an implementation, the processor 1401 may be specifically configured to:
distribute the input event to an application at a system layer; and
trigger, in response to the input event, the application at the system layer to execute a system operation instruction corresponding to the input event. In an implementation, the processor 1401 may be specifically configured to:
   obtain a feature parameter of the input event, where the feature parameter includes one or more of a pressing force, a sliding direction, an action location, and a quantity of touch times; and
   trigger, based on the feature parameter of the input event, a task associated with the first touch display area and/or the second touch display area to execute the operation instruction corresponding to the input event.

In an implementation, the operation instruction includes one or more of a screenshot instruction, a volume adjustment instruction, a page turning instruction, a window switching instruction, an instruction for opening or exiting an application program, or a fast forward or rewind instruction.

It should be noted that the apparatus in the foregoing embodiments may be a terminal device, or may be a chip used in the terminal device, or another combined device, component, or the like that has a function of the foregoing terminal.

An embodiment of this application further provides a readable storage medium. The readable storage medium includes a program or instructions. When the program or the instructions is/are run on a computer, the computer is enabled to perform the gesture interaction method performed by the gesture interaction apparatus in the foregoing method embodiments.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer instructions are loaded and executed on the computer, the procedure or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (Digital Video Disc, DVD)), a semiconductor medium (for example, a solid-state drive (Solid State Disk, SSD)), or the like.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions of each particular application without extending the implementation beyond the scope of this application.

The foregoing descriptions are merely specific implementations of this application, but are not intended to limit the protection scope of this application as defined by the appended claims. Any variation or replacement readily figured out by a person skilled in the art within the technical scope disclosed in this application shall fall within the protection scope of this application as defined by the appended claims. Therefore, the protection scope of this application shall be subject to the protection scope of the appended claims.

## Claims

1. A gesture interaction method, applied to a terminal device having a foldable screen, wherein the foldable screen of the terminal device in a folded state comprises a first touch display area (200B), a second touch display area (200C), and a third touch display area (200D), the third touch display area (200D) is between the first touch display area (200B) and the second touch display area (200C), and the method comprises:
determining (S601) that an angle value of an included angle formed between the first touch display area (200B) and the second touch display area (200C) is less than a specified angle value;
obtaining (S602) an input event that acts on the third touch display area (200D); and
triggering (S603), in response to the input event, the terminal device to execute an operation instruction corresponding to the input event,
wherein the triggering, in response to the input event, the terminal device to execute an operation instruction corresponding to the input event comprises:
obtaining a feature parameter of the input event, wherein the feature parameter comprises one or more of a pressing force, a sliding direction, an action location, and a quantity of touch times, wherein the feature parameter of the input event is used to indicate a target touch display area for which a gesture operation is specifically performed when the user inputs the gesture operation in the third touch display area, wherein the target touch display area is the first touch display area or the second touch display area;
**characterised in that**
the triggering, in response to the input event, the terminal device to execute an operation instruction corresponding to the input event further comprises
triggering, based on the feature parameter of the input event, a task associated with the first touch display area or the second touch display area (200C) to execute the operation instruction corresponding to the input event.

2. The method according to claim 1, wherein the obtaining an input event that acts on the third touch display area comprises:
detecting a gesture operation input by a user in the third touch display area; and
determining, based on the gesture operation, the input event that is of the user and that acts on the third touch display area.

3. The method according to claim 2, wherein the gesture operation comprises one or more of a single-hand holding operation, a two-hand holding operation, a tapping operation, a sliding operation, a pressing operation, a dragging operation, and a scaling operation.

4. The method according to claim 1, wherein the triggering, in response to the input event, the terminal device to execute an operation instruction corresponding to the input event comprises:
performing application callback registration for an application program that is being run at an application layer;
determining an application operation instruction corresponding to the input event in response to the input event; and
triggering, through callback invocation or broadcast notification, the application program that is being run at the application layer to execute the application operation instruction.

5. The method according to claim 1, wherein the triggering, in response to the input event, the terminal device to execute an operation instruction corresponding to the input event further comprises:
distributing the input event to an application at a system layer; and
triggering, in response to the input event, the application at the system layer to execute a system operation instruction corresponding to the input event.

6. The method according to claim 1, wherein the operation instruction comprises one or more of a screenshot instruction, a volume adjustment instruction, a page turning instruction, a window switching instruction, an instruction for opening or exiting an application program, or a fast forward or rewind instruction.

7. A gesture interaction apparatus (1300), comprising:
a determining unit (1301), configured to determine that an angle value of an included angle formed between a first touch display area (200B) of a terminal device and a second touch display area (200C) of the terminal device is less than a specified angle value;
an obtaining unit (1302), configured to obtain an input event that acts on a third touch display area (200D) between the first touch display area (200B) and the second touch display area (200C); and
a processing unit (1303), configured to trigger, in response to the input event, the terminal device to execute an operation instruction corresponding to the input event,
wherein when the processing unit (1303) is configured to trigger, in response to the input event, the terminal device to execute the operation instruction corresponding to the input event, the processing unit is specifically configured to:
obtain a feature parameter of the input event, wherein the feature parameter comprises one or more of a pressing force, a sliding direction, an action location, and a quantity of touch times, wherein the feature parameter of the input event is used to indicate a target touch display area for which a gesture operation is specifically performed when the user inputs the gesture operation in the third touch display area, wherein the target touch display area is the first touch display area or the second touch display area;
**characterised in that**
the processing unit is further configured to:
trigger, based on the feature parameter of the input event, a task associated with the first touch display area or the second touch display area to execute the operation instruction corresponding to the input event.

8. The apparatus according to claim 7, wherein when the obtaining unit is configured to obtain the input event that acts on the third touch display area, the obtaining unit is specifically configured to:
detect a gesture operation input by a user in the third touch display area; and
determine, based on the gesture operation, the input event that is of the user and that acts on the third touch display area.

9. The apparatus according to claim 8, wherein the gesture operation comprises one or more of a single-hand holding operation, a two-hand holding operation, a tapping operation, a sliding operation, a pressing operation, a dragging operation, and a scaling operation.

10. The apparatus according to claim 7, wherein when the processing unit is configured to trigger, in response to the input event, the terminal device to execute the operation instruction corresponding to the input event, the processing unit is specifically configured to:
perform application callback registration for an application program that is being run at an application layer;
determine an application operation instruction corresponding to the input event in response to the input event; and
trigger, through callback invocation or broadcast notification, the application program that is being run at the application layer to execute the application operation instruction.

11. The apparatus according to claim 7, wherein when the processing unit is configured to trigger, in response to the input event, the terminal device to execute the operation instruction corresponding to the input event, the processing unit is specifically configured to:
distribute the input event to an application at a system layer; and
trigger, in response to the input event, the application at the system layer to execute a system operation instruction corresponding to the input event.

12. A readable storage medium, comprising a program or instructions, wherein when the program or the instructions is or are run on a computer, the method according to any one of claims 1 to 6 is performed.

13. A computer program product, including one or more computer instructions, wherein when the computer instructions are loaded and executed on a computer, the method according to any one of claims 1 to 6 is performed.

## Patentansprüche

1. Gesteninteraktionverfahren, das auf ein Endgerät mit einem faltbaren Bildschirm angewendet wird, wobei der faltbare Bildschirm des Endgeräts im gefalteten Zustand einen ersten Berührungsanzeigebereich (200B), einen zweiten Berührungsanzeigebereich (200C) und einen dritten Berührungsanzeigebereich (200D) umfasst, wobei sich der dritte Berührungsanzeigebereich (200D) zwischen dem ersten Berührungsanzeigebereich (200B) und dem zweiten Berührungsanzeigebereich (200C) befindet, und das Verfahren Folgendes umfasst:
Bestimmen (S601), dass ein Winkelwert eines eingeschlossenen Winkels zwischen dem ersten Berührungsanzeigebereich (200B) und dem zweiten Berührungsanzeigebereich (200C) kleiner als ein angegebener Winkelwert ist;
Erlangen (S602) eines Eingabeereignisses, das auf den dritten Berührungsanzeigebereich (200D) wirkt; und
Auslösen (S603) des Endgeräts zur Ausführung einer dem Eingabeereignis entsprechenden Operationsanweisung als Reaktion auf das Eingabeereignis,
wobei das Auslösen des Endgeräts zur Ausführung einer dem Eingabeereignis entsprechenden Operationsanweisung als Reaktion auf das Eingabeereignis Folgendes umfasst:
Erlangen eines Merkmalsparameters des Eingabeereignisses, wobei der Merkmalsparameter eines oder mehrere von einer Druckkraft, einer Gleitrichtung, einem Aktionsort und einer Anzahl der Berührungszeiten umfasst, wobei der Merkmalsparameter des Eingabeereignisses verwendet wird, um einen Ziel-Berührungsanzeigebereich anzuzeigen, für den eine Gestenoperation speziell ausgeführt wird, wenn der Benutzer die Gestenoperation im dritten Berührungsanzeigebereich eingibt, wobei der Ziel-Berührungsanzeigebereich der erste Berührungsanzeigebereich oder der zweite Berührungsanzeigebereich ist;
**dadurch gekennzeichnet, dass**
das Auslösen des Endgeräts zur Ausführung einer dem Eingabeereignis entsprechenden Operationsanweisung als Reaktion auf das Eingabeereignis ferner das Auslösen einer mit dem ersten Berührungsanzeigebereich oder dem zweiten Berührungsanzeigebereich (200C) verknüpften Aufgabe auf der Grundlage des Merkmalsparameters des Eingabeereignisses zur Ausführung der dem Eingabeereignis entsprechenden Operationsanweisung umfasst.

2. Verfahren nach Anspruch 1, wobei das Erlangen eines Eingabeereignisses, das auf den dritten Berührungsanzeigebereich wirkt, Folgendes umfasst:
Erkennen einer von einem Benutzer im dritten Berührungsanzeigebereich eingegebenen Gestenoperation; und
Bestimmen des Eingabeereignisses, das vom Benutzer stammt und auf den dritten Berührungsanzeigebereich einwirkt, basierend auf der Gestenoperation.

3. Verfahren nach Anspruch 2, wobei die Gestenoperation eine oder mehrere einer einhändigen Halteoperation, einer beidhändigen Halteoperation, einer Tippoperation, einer Schiebeoperation, einer Drückoperation, einer Ziehoperation und einer Skalieroperation umfasst.

4. Verfahren nach Anspruch 1, wobei das Auslösen des Endgeräts zur Ausführung einer dem Eingabeereignis entsprechenden Operationsanweisung als Reaktion auf das Eingabeereignis Folgendes umfasst:
Durchführen einer Anwendungs-Callback-Registrierung für ein Anwendungsprogramm, das auf einer Anwendungsebene ausgeführt wird;
Bestimmen einer Anwendungsoperationsanweisung, die dem Eingabeereignis entspricht, als Reaktion auf das Eingabeereignis; und
Auslösen des auf der Anwendungsebene ausgeführten Anwendungsprogramms durch Callbackaufruf oder Broadcast-Benachrichtigung, um die Anwendungsoperationsanweisung auszuführen.

5. Verfahren nach Anspruch 1, wobei das Auslösen des Endgeräts zur Ausführung einer dem Eingabeereignis entsprechenden Operationsanweisung als Reaktion auf das Eingabeereignis Folgendes umfasst:
Verteilen des Eingabeereignisses an eine Anwendung auf Systemschicht; und
Auslösen der Anwendung auf der Systemebene als Reaktion auf das Eingabeereignis, um eine dem Eingabeereignis entsprechende Systemoperationsanweisung auszuführen.

6. Verfahren nach Anspruch 1, wobei die Operationsanweisung eine oder mehrere einer Screenshot-Anweisung, einer Lautstärkeregelungs-Anweisung, einer Seitenumblätter-Anweisung, einer Fensterwechsel-Anweisung, eine Anweisung zum Öffnen oder Beenden eines Anwendungsprogramms oder einer Schnellvorlauf- oder Rücklauf-Anweisung umfasst.

7. Gesteninteraktionsvorrichtung (1300), das Folgendes umfasst:
eine Bestimmungseinheit (1301), die dazu konfiguriert ist, zu bestimmen, dass ein Winkelwert eines eingeschlossenen Winkels zwischen einem ersten Berührungsanzeigebereich (200B) eines Endgeräts und einem zweiten Berührungsanzeigebereich (200C) des Endgeräts kleiner als ein festgelegter Winkelwert ist;
eine Erhaltungseinheit (1302), die dazu konfiguriert ist, ein Eingabeereignis zu erfassen, das auf einen dritten Berührungsanzeigebereich (200D) zwischen dem ersten Berührungsanzeigebereich (200B) und dem zweiten Berührungsanzeigebereich (200C) einwirkt; und
eine Verarbeitungseinheit (1303), die dazu konfiguriert ist, als Reaktion auf das Eingabeereignis das Endgerät dazu zu veranlassen, eine dem Eingabeereignis entsprechende Operationsanweisung auszuführen,
wobei die Verarbeitungseinheit (1303) so konfiguriert ist, dass sie als Reaktion auf das Eingabeereignis das Endgerät dazu veranlasst, die dem Eingabeereignis entsprechende Operationsanweisung auszuführen, wobei die Verarbeitungseinheit insbesondere für Folgendes konfiguriert ist:
Erlangen eines Merkmalsparameters des Eingabeereignisses, wobei der Merkmalsparameter eines oder mehrere von einer Druckkraft, einer Gleitrichtung, einem Aktionsort und einer Anzahl der Berührungszeiten umfasst, wobei der Merkmalsparameter des Eingabeereignisses verwendet wird, um einen Ziel-Berührungsanzeigebereich anzuzeigen, für den eine Gestenoperation speziell ausgeführt wird, wenn der Benutzer die Gestenoperation im dritten Berührungsanzeigebereich eingibt, wobei der Ziel-Berührungsanzeigebereich der erste Berührungsanzeigebereich oder der zweite Berührungsanzeigebereich ist;
**dadurch gekennzeichnet, dass**
die Verarbeitungseinheit ferner für Folgendes konfiguriert ist: Auslösen, basierend auf dem Merkmalsparameter des Eingabeereignisses, eine mit dem ersten oder dem zweiten Berührungsanzeigebereich verknüpfte Aufgabe, um die dem Eingabeereignis entsprechende Operationsanweisung auszuführen.

8. Gerät nach Anspruch 7, wobei, wenn die Erlangungseinheit dazu konfiguriert ist, das Eingabeereignis zu erlangen, das auf den dritten Berührungsanzeigebereich einwirkt, wobei die Erlangungseinheit speziell für Folgendes konfiguriert ist:
Erkennen einer von einem Benutzer im dritten Berührungsanzeigebereich eingegebenen Gestenoperation; und
Bestimmen des Eingabeereignisses, das vom Benutzer stammt und auf den dritten Berührungsanzeigebereich einwirkt, basierend auf der Gestenoperation.

9. Gerät nach Anspruch 8, wobei die Gestenoperation eine oder mehrere einer einhändigen Halteoperation, einer beidhändigen Halteoperation, einer Tippoperation, einer Schiebeoperation, einer Drückoperation, einer Ziehoperation und einer Skalieroperation umfasst.

10. Gerät nach Anspruch 7, wobei die Verarbeitungseinheit so konfiguriert ist, dass sie als Reaktion auf das Eingabeereignis das Endgerät dazu veranlasst, die dem Eingabeereignis entsprechende Operationsanweisung auszuführen, wobei die Verarbeitungseinheit insbesondere für Folgendes konfiguriert ist:
Durchführen einer Anwendungs-Callback-Registrierung für ein Anwendungsprogramm, das auf einer Anwendungsebene ausgeführt wird;
Bestimmen einer Anwendungsoperationsanweisung, die dem Eingabeereignis entspricht, als Reaktion auf das Eingabeereignis; und
Auslösen des auf der Anwendungsebene ausgeführten Anwendungsprogramms durch Callbackaufruf oder Broadcast-Benachrichtigung, um die Anwendungsoperationsanweisung auszuführen.

11. Gerät nach Anspruch 7, wobei die Verarbeitungseinheit so konfiguriert ist, dass sie als Reaktion auf das Eingabeereignis das Endgerät dazu veranlasst, die dem Eingabeereignis entsprechende Operationsanweisung auszuführen, wobei die Verarbeitungseinheit insbesondere für Folgendes konfiguriert ist:
Verteilen des Eingabeereignisses an eine Anwendung auf Systemschicht; und
Auslösen der Anwendung auf der Systemebene als Reaktion auf das Eingabeereignis, um eine dem Eingabeereignis entsprechende Systemoperationsanweisung auszuführen.

12. Ein lesbares Speichermedium, das ein Programm oder Anweisungen umfasst, wobei, wenn das Programm oder die Anweisungen auf einem Computer ausgeführt werden, das Verfahren gemäß einem der Ansprüche 1 bis 6 ausgeführt wird.

13. Ein Computerprogrammprodukt, das eine oder mehrere Computeranweisungen umfasst, wobei wenn die Computeranweisungen auf einen Computer geladen und dort ausgeführt werden, das Verfahren gemäß einem der Ansprüche 1 bis 6 ausgeführt wird.

## Revendications

1. Procédé d'interaction par geste, appliqué à un dispositif terminal doté d'un écran pliable, dans lequel l'écran pliable du dispositif terminal dans un état plié comprend une première zone d'affichage tactile (200B), une deuxième zone d'affichage tactile (200C) et une troisième zone d'affichage tactile (200D), la troisième zone d'affichage tactile (200D) est située entre la première zone d'affichage tactile (200B) et la deuxième zone d'affichage tactile (200C) et le procédé comprend :
la détermination (S601) qu'une valeur d'angle d'un angle inclus formé entre la première zone d'affichage tactile (200B) et la deuxième zone d'affichage tactile (200C) est inférieure à une valeur d'angle spécifiée ;
l'obtention (S602) d'un événement d'entrée qui agit sur la troisième zone d'affichage tactile (200D) ; et
le déclenchement (S603), en réponse à l'événement d'entrée, du dispositif terminal afin d'exécuter une instruction d'opération correspondant à l'événement d'entrée,
dans lequel le déclenchement, en réponse à l'événement d'entrée, du dispositif terminal afin d'exécuter une instruction d'opération correspondant à l'événement d'entrée comprend :
l'obtention d'un paramètre de caractéristique de l'événement d'entrée, dans lequel le paramètre de caractéristique comprend un ou plusieurs éléments parmi une force de pression, une direction de glissement, un emplacement d'action, et une quantité de temps de contact, dans lequel le paramètre de caractéristique de l'événement d'entrée est utilisé pour indiquer une zone d'affichage tactile cible pour laquelle une opération par geste est spécifiquement réalisée lorsque l'utilisateur entre l'opération par geste dans la troisième zone d'affichage tactile, dans lequel la zone d'affichage tactile cible est la première zone d'affichage tactile ou la deuxième zone d'affichage tactile ;
**caractérisé en ce que**
le déclenchement, en réponse à l'événement d'entrée, du dispositif terminal afin d'exécuter une instruction d'opération correspondant à l'événement d'entrée comprend également le déclenchement, sur la base du paramètre de caractéristique de l'événement d'entrée, d'une tâche associée à la première zone d'affichage tactile ou à la deuxième zone d'affichage tactile (200C) afin d'exécuter l'instruction d'opération correspondant à l'événement d'entrée.

2. Procédé selon la revendication 1, dans lequel l'obtention d'un événement d'entrée agissant sur la troisième zone d'affichage tactile comprend :
la détection d'une opération par geste entrée par un utilisateur dans la troisième zone d'affichage tactile ; et
la détermination, sur la base de l'opération par geste, de l'événement d'entrée qui est de l'utilisateur et agissant sur la troisième zone d'affichage tactile.

3. Procédé selon la revendication 2, dans lequel l'opération par geste comprend une ou plusieurs opérations parmi une opération de maintien à une seule main, une opération de maintien à deux mains, une opération de tapotement, une opération de glissement, une opération de pression, une opération de traînage et une opération de mise à l'échelle.

4. Procédé selon la revendication 1, dans lequel le déclenchement, en réponse à l'événement d'entrée, du dispositif terminal afin d'exécuter une instruction d'opération correspondant à l'événement d'entrée comprend :
la réalisation d'un enregistrement du rappel d'application pour un programme d'application qui est exécuté au niveau d'une couche d'application ;
la détermination d'une instruction d'opération d'application correspondant à l'événement d'entrée en réponse à l'événement d'entrée ; et
le déclenchement, via une invocation de rappel ou une notification de diffusion, du programme d'application qui est exécuté au niveau de la couche d'application afin d'exécuter l'instruction d'opération d'application.

5. Procédé selon la revendication 1, dans lequel le déclenchement, en réponse à l'événement d'entrée, du dispositif terminal afin d'exécuter une instruction d'opération correspondant à l'événement d'entrée comprend également :
la distribution de l'événement d'entrée à une application au niveau d'une couche système ; et
le déclenchement, en réponse à l'événement d'entrée, de l'application au niveau de la couche système afin d'exécuter une instruction d'opération système correspondant à l'événement d'entrée.

6. Procédé selon la revendication 1, dans lequel l'instruction d'opération comprend une ou plusieurs instructions parmi une instruction de capture d'écran, une instruction de réglage du volume, une instruction de changement de page, une instruction de changement de fenêtre, une instruction d'ouverture ou de sortie d'un programme d'application, ou une instruction de retour ou d'avance rapide.

7. Appareil d'interaction par geste (1300), comprenant :
une unité de détermination (1301), configurée pour déterminer qu'une valeur d'angle d'un angle inclus formé entre une première zone d'affichage tactile (200B) d'un dispositif terminal et une deuxième zone d'affichage tactile (200C) du dispositif terminal est inférieure à une valeur d'angle spécifiée ;
une unité d'obtention (1302), configurée pour obtenir un événement d'entrée agissant sur une troisième zone d'affichage tactile (200D) entre la première zone d'affichage tactile (200B) et la deuxième zone d'affichage tactile (200C) ; et
une unité de traitement (1303), configurée pour déclencher, en réponse à l'événement d'entrée, le dispositif terminal afin d'exécuter une instruction d'opération correspondant à l'événement d'entrée,
dans lequel lorsque l'unité de traitement (1303) est configurée pour déclencher, en réponse à l'événement d'entrée, le dispositif terminal afin d'exécuter l'instruction d'opération correspondant à l'événement d'entrée, l'unité de traitement est spécifiquement configurée pour :
obtenir un paramètre de caractéristique de l'événement d'entrée,
dans lequel le paramètre de caractéristique comprend un ou
plusieurs éléments parmi une force de pression, une direction de glissement, un emplacement d'action, et une quantité de temps de contact, dans lequel le paramètre de caractéristique de l'événement d'entrée est utilisé pour indiquer une zone d'affichage tactile cible pour laquelle une opération par geste est spécifiquement réalisée lorsque l'utilisateur entre l'opération par geste dans la troisième zone d'affichage tactile, dans lequel la zone d'affichage tactile cible est la première zone d'affichage tactile ou la deuxième zone d'affichage tactile ;
**caractérisé en ce que**
l'unité de traitement est également configurée pour :
déclencher, sur la base du paramètre de caractéristique de l'événement d'entrée, une tâche associée à la première zone d'affichage tactile ou à la deuxième zone d'affichage tactile afin d'exécuter l'instruction d'opération correspondant à l'événement d'entrée.

8. Appareil selon la revendication 7, dans lequel, lorsque l'unité d'obtention est configurée pour obtenir l'événement d'entrée agissant sur la troisième zone d'affichage tactile, l'unité d'obtention est spécifiquement configurée pour :
détecter une opération par geste entrée par un utilisateur dans la troisième zone d'affichage tactile ; et
déterminer, sur la base de l'opération par geste, l'événement d'entrée qui est de l'utilisateur et agissant sur la troisième zone d'affichage tactile.

9. Appareil selon la revendication 8, dans lequel l'opération par geste comprend une ou plusieurs opérations parmi une opération de maintien à une seule main, une opération de maintien à deux mains, une opération de tapotement, une opération de glissement, une opération de pression, une opération de traînage et une opération de mise à l'échelle.

10. Appareil selon la revendication 7, dans lequel lorsque l'unité de traitement est configurée pour déclencher, en réponse à l'événement d'entrée, le dispositif terminal afin d'exécuter l'instruction d'opération correspondant à l'événement d'entrée, l'unité de traitement est spécifiquement configurée pour :
réaliser un enregistrement du rappel d'application pour un programme d'application qui est exécuté au niveau d'une couche d'application ;
déterminer une instruction d'opération d'application correspondant à l'événement d'entrée en réponse à l'événement d'entrée ; et
déclencher, via une invocation de rappel ou une notification de diffusion, le programme d'application qui est exécuté au niveau de la couche d'application afin d'exécuter l'instruction d'opération d'application.

11. Appareil selon la revendication 7, dans lequel lorsque l'unité de traitement est configurée pour déclencher, en réponse à l'événement d'entrée, le dispositif terminal afin d'exécuter l'instruction d'opération correspondant à l'événement d'entrée, l'unité de traitement est spécifiquement configurée pour :
distribuer l'événement d'entrée à une application au niveau d'une couche système ; et
déclencher, en réponse à l'événement d'entrée, l'application au niveau de la couche système afin exécuter une instruction d'opération système correspondant à l'événement d'entrée.

12. Support de stockage lisible, comprenant un programme ou des instructions, dans lequel lorsque le programme ou les instructions sont exécutés sur un ordinateur, le procédé selon l'une quelconque des revendications 1 à 6 est réalisé.

13. Produit de programme informatique, comportant une ou plusieurs instructions informatiques, dans lequel lorsque les instructions informatiques sont chargées et exécutées sur un ordinateur, le procédé selon l'une quelconque des revendications 1 à 6 est réalisé.
